# FASCICULE DE BREVET EUROPEEN

(11) **EP 1 750 980 B1**
(45) Date de publication et mention de la délivrance du brevet: **24.06.2009**
(21) Numéro de dépôt: 05746892.8
(22) Date de dépôt: 29.04.2005
(51) Int. Cl.: B60R 22/22

(54) **PROCEDE DE REVELAGE D'UN SIEGE AUTOMOBILE ET SON DISPOSITIF**
VERFAHREN ZUM ANHEBEN EINES SITZES EINES KRAFTFAHRZEUGES UND DIE ENTSPRECHENDE VORRICHTUNG
METHOD FOR RAISING A SEAT OF A MOTOR VEHICLE AND THE CORRESPONDENT APPARATUS

(30) Priorité: 17.05.2004 FR 0405363
(43) Date de publication de la demande: 14.02.2007
(73) Titulaire: Renault SAS, 92100 Boulogne Billancourt (FR)
(72) Inventeur: SOUVILLE, Philippe, F-78180 MONTIGNY LE BRETONNEUX (FR); LAZZARONI, Georges, F-78280 GUYANCOURT (FR); DUVALLET, Patrick, F-78280 GUYANCOURT (FR)
(86) Numéro de dépôt international: PCT/FR2005/050291
(87) Numéro de publication internationale: WO 2005/113302

(56) Documents cités:
- WO-A-00/21778
- WO-A-00/55003
- DE-A1- 3 531 857
- FR-A- 2 563 716
- FR-A- 2 796 897
- FR-A- 2 818 594
- US-A- 4 700 989
- US-A- 4 925 229
- US-A- 5 810 443
- US-A- 6 152 533
- US-B1- 6 371 556
- US-B1- 6 478 358
- US-B1- 6 523 899
- PATENT ABSTRACTS OF JAPAN vol. 007, no. 120 (M-217), 25 mai 1983 (1983-05-25) & JP 58 039538 A (TOYO KOGYO KK; others: 01), 8 mars 1983 (1983-03-08)
- PATENT ABSTRACTS OF JAPAN vol. 007, no. 120 (M-217), 25 mai 1983 (1983-05-25) & JP 58 039537 A (TOYO KOGYO KK; others: 01), 8 mars 1983 (1983-03-08)
- PATENT ABSTRACTS OF JAPAN vol. 007, no. 120 (M-217), 25 mai 1983 (1983-05-25) & JP 58 039536 A (TOYO KOGYO KK; others: 01), 8 mars 1983 (1983-03-08)
- PATENT ABSTRACTS OF JAPAN vol. 007, no. 116 (M-216), 20 mai 1983 (1983-05-20) & JP 58 036735 A (TOYO KOGYO KK; others: 01), 3 mars 1983 (1983-03-03)

## Description

L'invention a pour objet un procédé de relevage d'un siège d'un véhicule, en particulier une banquette arrière dont l'assise est articulée, par sa partie avant, sur le plancher du véhicule. De plus l'invention porte sur le siège en question.

Certains véhicules automobiles sont équipés d'une banquette arrière dite « portefeuille » qui peut être verticalisée complètement afin d'augmenter l'espace de chargement. Pour cela, le dossier est articulé sur l'assise qui est elle-même articulée, par sa partie avant, sur le plancher du véhicule. De la sorte, après déverrouillage de l'articulation, le dossier peut être rabattu contre l'assise et l'ensemble dossier-assise ainsi replié, peut être relevé dans une position sensiblement verticale permettant de dégager toute la partie arrière du plancher. Souvent, le siège est monté coulissant sur deux glissières parallèles à la direction longitudinale du véhicule et articulées à leur extrémité avant sur le plancher, pour permettre le relevage complet du siège après repliement du dossier. Bien entendu, en position normale, le siège doit être rigide et est muni d'articulations verrouillables, d'une part entre le dossier et l'assise et, d'autre part, entre les glissières de l'assise et le plancher.

Par ailleurs, chaque siège doit être muni d'un système de retenue comportant une ceinture de sécurité pour chacun des occupants et ces ceintures doivent être reliées par des organes d'attache à la caisse du véhicule. Une ceinture comporte donc, habituellement, deux systèmes d'attache latéraux, respectivement supérieur et inférieur, qui sont fixés directement sur la caisse, et une attache centrale qui vient se fixer de façon amovible, au niveau de la banquette, sur un point d'ancrage parfois appelé « pédoncule ». Lorsque la banquette comporte trois places, la sécurité du passager central est assurée par deux points d'ancrage écartés l'un de l'autre et placés au niveau de la banquette, généralement à côté des points d'ancrage amovibles des deux passagers latéraux.

En position de circulation normale, les points d'ancrage doivent être solidarisés avec le plancher du véhicule pour assurer la sécurité des occupants.

Dans le cas d'un siège relevable, les points d'ancrage sont fixés sur le châssis de la banquette afin de se relever avec celle-ci et ils doivent donc être solidarisés avec le plancher par des organes d'accrochage qui s'engagent de façon amovible sur des parties d'appui correspondantes du plancher.

Pour assurer le relevage d'une banquette du type « portefeuille », il faut donc, tout d'abord, déverrouiller l'articulation du dossier pour permettre le repliement de celui-ci sur la banquette, décrocher ensuite les organes d'attache pour les désolidariser du plancher et, enfin, déverrouiller l'articulation de l'assise sur le plancher pour permettre le relevage de l'ensemble.

Ainsi, trois opérations de déverrouillage doivent être effectuées.

Ces opérations se compliquent encore lorsque le dossier est en plusieurs parties. En effet, s'il est nécessaire, pour agrandir le compartiment à bagages, de replier la banquette dans son ensemble, le véhicule ne comporte plus que deux places à l'avant Pour conserver au moins une place à l'arrière, on réalise donc des véhicules dont le dossier arrière est en deux parties. Ainsi, il est possible de replier une seule partie du dossier pour agrandir, de ce coté le compartiment à bagages, en conservant un siège disponible pour un troisième passager. Dans les véhicules comportant cinq places, le dossier arrière est souvent dissymétrique et comporte une partie pour un passager latéral et une autre partie pour le passager central et l'autre passager latéral. Il est alors possible, selon les besoins, de conserver une ou deux places à l'arrière tout en agrandissant le compartiment à bagages par repliement de l'une des parties du dossier. Ces dispositions compliquent, cependant, la réalisation des différents systèmes de verrouillage.

Du document FR 2 787 405 on connaît un procédé de relevage d'un siège d'un véhicule et son dispositif qui comprennent les caractéristiques du préambule des revendications 1 + 2.

L'invention a pour objet de résoudre de tels problèmes grâce à un procédé et à un dispositif de relevage d'un siège permettant, en particulier, de simplifier tes systèmes de verrouillage et les manipulations qui doivent être effectuées pour le repliement partiel ou complet du dossier et le relevage de la banquette.

D'une façon générale, l'invention concerne donc le relevage d'un siège de véhicule apte à être fixé sur un plancher, transversalement à un axe longitudinal du véhicule et comportant une assise ayant un châssis monté pivotant autour d'un axe apte à être relié au plancher par l'intermédiaire d'une première articulation verrouillable, et un dossier monté pivotant sur le châssis de l'assise autour d'un axe, par l'intermédiaire d'une seconde articulation verrouillable, le véhicule étant équipé d'un système de retenue comportant au moins un organe d'attache solidaire du châssis de l'assise et relié de façon amovible au plancher du véhicule par un moyen d'accrochage verrouillable,

Selon l'invention, le décrochage de l'organe d'attache est commandé directement par le repliement du dossier. De la sorte, l'opération est transparente pour le client qui n'a pas à agir sur les crochets des organes d'attache, le décrochage de ces derniers s'effectuant automatiquement par te repliement du dossier qui sert de bras de levier pour la commande des crochets.

L'invention s'applique spécialement au relevage d'un siège de véhicule ayant un dossier en deux parties et une banquette unique. Dans un premier mode de Selon l'invention, après déverrouillage de l'articulation de l'une des parties du dossier, le repliement de cette partie commande le déverrouillage des organes d'attache, l'autre partie du dossier restant redressée pour un occupant dont la sécurité est assurée par l'organe d'attache correspondant et le châssis de la banquette sur lequel il est fixé, cette dernière restant solidarisée avec le plancher.

Selon l'invention, un premier dossier peut être replié seul sans action sur les organes d'attache et le repliement du second dossier entraîne le repliement du premier dossier et commande le décrochage de l'ensemble des organes d'attache.

Selon l'invention, le décrochage de l'ensemble des organes d'attache peut être commandé de deux façons différentes, respectivement par repliement simultané des deux parties du dossier ou bien après repliement préalable de l'une quelconque des deux parties du dossier sans action sur les organes d'attache, le repliement de l'autre partie commandant ensuite le décrochage de l'ensemble.

L'invention couvre également un siège perfectionné pour la mise en oeuvre du procédé.

Conformément à l'invention, au moins un organe d'attache du système de retenue est fixé sur une pièce de support solidaire du châssis de l'assise de la banquette et reliée de façon amovible au plancher par au moins un moyen d'accrochage verrouillable, mobile entre une position de verrouillage pour laquelle le moyen d'accrochage s'engage sur une partie d'appui conjuguée du plancher et une position de déverrouillage, et ce moyen d'accrochage est relié cinématiquement à au moins une partie du dossier de façon que le repliement de cette partie détermine le déverrouillage du moyen d'accrochage et que le redressement de ladite partie du dossier détermine le déverrouillage du moyen d'accrochage sur la partie d'appui conjuguée du plancher.

De préférence, le moyen d'accrochage comporte au moins une pièce montée rotative, autour d'un axe transversal, sur une tige de support solidaire du châssis de la banquette, avec une partie formant cochet qui s'engage sur une partie d'appui conjuguée du véhicule par rotation autour de l'axe de la tige de support. La pièce d'accrochage est, d'autre part, reliée à au moins une partie du dossier par un moyen de liaison cinématique qui transforme la rotation de cette partie du dossier en une rotation de la pièce d'accrochage au moins dans le sens de dégagement de la partie formant crochet.

Ce moyen de liaison cinématique peut, en particulier. être un lien de longueur constante fixé par une extrémité sur le moyen d'accrochage en un point écarté de l'axe de rotation et par une autre extrémité sur une partie du dossier en un point écarté de l'axe d'articulation.

Dans un mode de réalisation préférentiel, ce moyen de liaison cinématique est un lien souple coulissant dans une gaine et déterminant la rotation du moyen d'accrochage dans le sens d'ouverture du crochet, contre l'action d'un moyen de rappel élastique du crochet dans sa position de verrouillage.

Selon l'invention, le dossier étant constitué de deux parties, le moyen d'accrochage est relié cinématiquement à l'une ou l'autre desdites parties par un organe de solidarisation placé des deux cotés adjacents de celles-ci et susceptible de se verrouiller alternativement sur l'une quelconque desdites parties du dossier par repliement de l'autre partie.

Dans un mode de réalisation préférentiel, l'organe de solidarisation est un doigt de commande constitué d'une tige s'étendant transversalement entre deux cotés adjacents des deux parties du dossier et susceptible de s'engager, par déplacement axial, dans l'un ou l'autre de deux orifices ménagés respectivement sur lesdits cotés adjacents. A cet effet, chacun des deux cotés adjacents porte une came constituée d'une partie en saillie circulaire centrée sur l'axe d'articulation du dossier et formant une rampe susceptible, par rotation de la partie du dossier correspondante, de repousser axialement le doigt de commande, afin que son extrémité opposée s'engage dans un orifice ménagé sur le coté de l'autre partie du dossier, contre l'action d'un moyen de rappel du doigt dans une position médiane pour laquelle les deux extrémités du doigt sont écartées respectivement desdits coté adjacents, sans engagement dans les orifices correspondants. Dans cette position médiane, les deux extrémités du doigt de commande prennent appui respectivement sur une face antérieure formant rampe de chacune des deux cames de façon que, par repliement de l'une des parties du dossier, la came placée sur cette partie, repousse le doigt vers l'autre partie pour son engagement dans l'orifice correspondant et que, par repliement simultané des deux parties du dossier, les deux cames prennent appui respectivement sur les deux extrémités du doigt et entraînent ce dernier dans leur rotation pour la commande du déverrouillage de l'ensemble des organes d'attache.

D'autres caractéristiques avantageuses de l'invention apparaîtront dans la description qui va suivre de certains modes de réalisation particuliers donnés à titre d'exemple non limitatif et représenté sur les dessins annexés.
La figure 1 est une vue de face, en perspective, du châssis de l'ensemble d'un siège.
La figure 2 est une vue de détail, en perspective, de l'articulation et des systèmes de déverrouillage.
La figure 3 est une vue de l'arrière, en perspective, de l'articulation.
La figure 4 est une vue schématique, en perspective, du système de déverrouillage par cames.
La figure 5 est une vue de dessus schématique du système de déverrouillage par cames.
La figure 6 est une vue partielle de coté selon la ligne A.A de la figure 5.

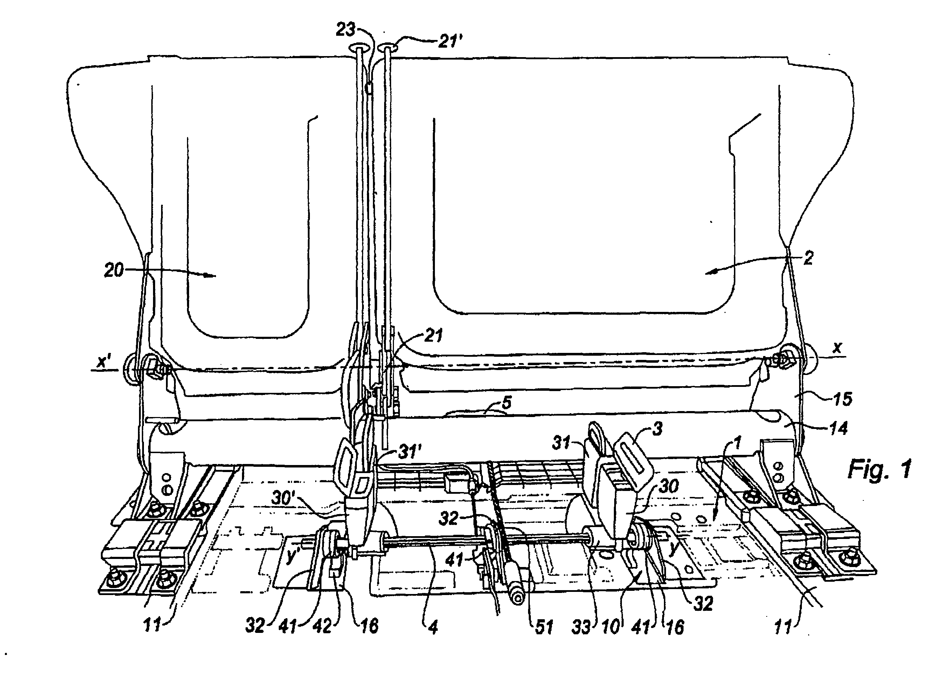

La figure 1 est une vue partielle, en perspective de la banquette arrière d'un véhicule, montrant, après enlèvement des coussins, le châssis 1 de l'assise, sur lequel est articulé le châssis, en position relevée, du dossier qui est constitué en deux parties, respectivement une partie 2 pour deux occupants et une partie 20 pour un occupant latéral, respectivement à gauche et à droite du véhicule en regardant vers l'avant.

Comme habituellement, le châssis 1 de l'assise est monté coulissant sur deux glissières 11 parallèles à la direction longitudinale du véhicule, de façon à permettre l'avancement ou le recul du siège arrière par rapport au siège avant. De façon connue, les deux glissières 11 sont montées pivotantes, à leur extrémité avant, sur le plancher du véhicule pour permettre le relevage de la banquette, les glissières étant solidarisées avec le plancher par un moyen amovible de verrouillage. Le système de coulissement de la banquette et de verrouillage des glissières peut être de tout type connu et n'est donc pas représenté en détail sur les dessins.

Sur la partie arrière du châssis 1 de la banquette est fixé un arbre transversal 14 portant quatre flasques 15 sur lesquels sont articulés les châssis 2, 20, des deux parties du dossier, autour d'un axe transversal d'articulation X' X. Chaque partie 2, 20 du dossier peut donc être repliée sur la banquette par rotation autour de l'axe X' X. Cependant, l'articulation peut être bloquée par un système amovible de verrouillage 21 commandé manuellement par une tirette 21' placée à la partie supérieure du dossier. Ce système amovible de verrouillage de articulation peut être de tout type connu et n'est donc pas représenté en détail sur les dessins.

Comme habituellement, le siège est muni, d'autre part, d'un système de retenue comportant une ceinture de sécurité pour chaque passager. Dans le cas représenté d'une banquette pour trois personnes, chaque ceinture de sécurité latérale comprend deux points d'ancrage latéraux, respectivement supérieur et inférieur, fixés directement sur la caisse du véhicule et non représentés sur le dessin et vient se fixer de façon amovible, par un pêne de ceinture 3, sur un point d'ancrage central 30 appelé, habituellement, pédoncule, et solidaire de l'assise. Celle-ci comporte donc deux pédoncules 30, 30' pour les passagers latéraux. Le passager central est assuré lui-même par deux points d'attache 31, 31' solidaires également du châssis 1 de la banquette et placés à côté des deux pédoncules 30, 30'.

Comme indiqué plus haut, pour assurer la sécurité des occupants, ces organes d'attache 30, 30', 31, 31' doivent être solidarisés, en circulation normale, avec le plancher du véhicule mais d'une façon amovible permettant le relevage de la banquette. Ce moyen de solidarisation doit être adapté aux besoins de passage d'efforts au plancher.

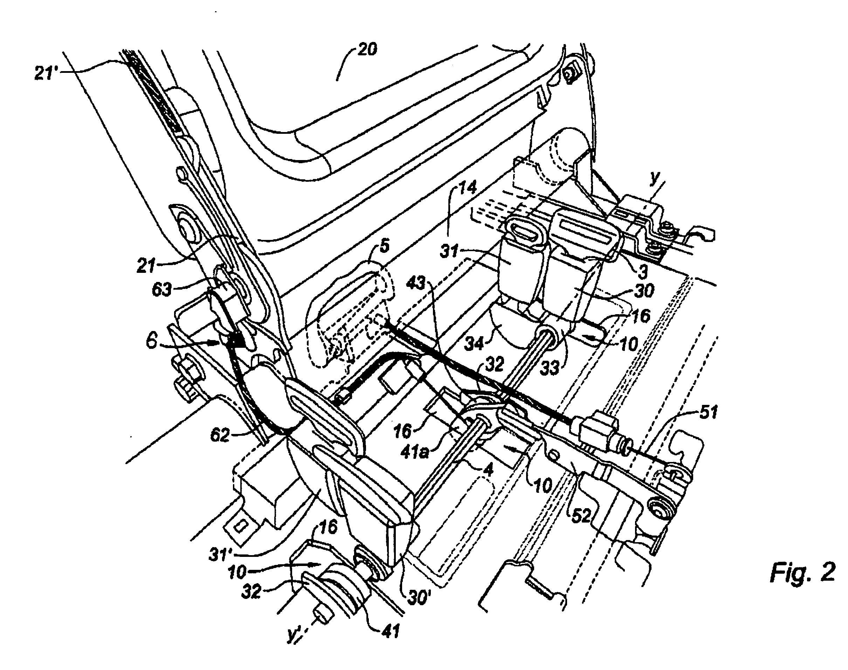

Dans le mode de réalisation préférentiel représenté sur les dessins, les organes d'attache sont portés par une tige 4 montée rotative autour d'un axe transversal Y' Y sur trois supports écartés 32 fixés sur le fond du châssis 1 de la banquette. Par exemple, chaque pédoncule 30 30' d'une ceinture latérale peut être fixée, à sa base, sur une douille munie d'un palier 33 enfilé sur la tige 4 avec possibilité de rotation libre autour de l'axe Y' Y de celle-ci de façon à donner une certaine liberté de positionnement au pédoncule. De même, comme le montre la figure 2, les organes d'attache 31 31' de la ceinture du passager central peuvent être fixés sur des supports 34 solidaires des douilles 33 et tournant avec celles-ci.

Par ailleurs, les organes d'attache peuvent être solidarisés de façon amovible avec le plancher du véhicule. A cet effet, dans l'exemple représenté sur ces figures, la tige transversale 4 porte trois crochets 41 montés respectivement dans sa partie centrale et à ses deux extrémités, à coté des douilles 33 de fixation des pédoncules 30 30'.

Cependant, alors que les organes d'attache 30 30' tournent librement sur la tige 4, les trois crochets 41 sont solidarisés en rotation avec celle-ci, par exemple par des parties cannelées. Comme le montrent les figures 1 et 2, la partie inférieure du châssis 1 de la banquette est munie, au niveau de chaque crochet 41, d'un trou 16 permettant le passage d'un prolongement 42 du crochet 41 qui vient s'engager, de façon classique, dans une partie d'appui conjuguée du plancher 10, au niveau du trou 16.

Pour permettre de régler le positionnement longitudinal du siège arrière, le plancher 10 est muni de parties d'appui constituées, dans l'invention, de trois séries de crans écartées longitudinalement et ménagées respectivement au niveau des trous 16 du châssis **1,** de façon à permettre l'engagement des trois crochets **41** montés sur la tige transversale **4** sur trois crans alignés, selon la position longitudinale de la banquette.

Comme le montre la figure 2, le crochet central **41a** qui est solidaire, en rotation, de la tige transversale 4. est relié à une poignée 5 servant au positionnement du siège arrière, par un câble 51 et une tringlerie 52 déterminant l'ouverture de l'ensemble des crochets 41 lorsque l'on actionne la poignée 5 qui est articulée autour d'un axe transversal. Lorsque la poignée 5 est relachée, les crochets 41 passant dans les trous 16 sont ramenés dans leur position de fermeture par un moyen de rappel élastique 43 constitué, par exemple, d'un ressort concentrique au crochet central 41a et s'engagent ainsi dans les trois crans alignés.

Ainsi, il est possible de régler selon les besoins la position longitudinale du siège arrière, les crochets **41** étant rappelés dans leur position de fermeture par le ressort 43.

Selon l'invention, cependant, l'ouverture des crochets **41** est également commandée par le rabattement des dossiers lorsque l'on relève la banquette en position verticale afin de dégager l'espace de chargement.

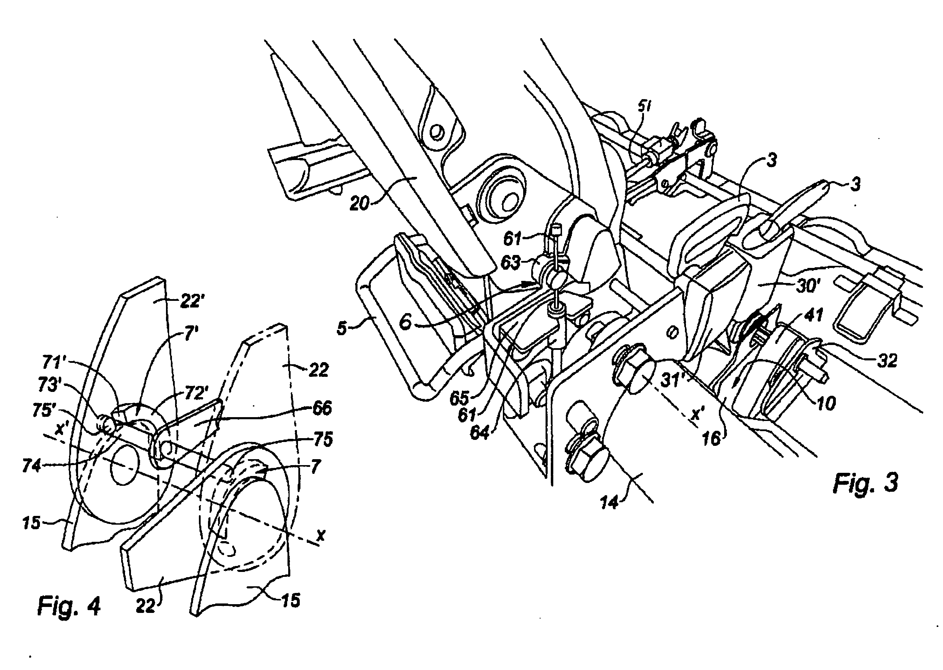

A cet effet, l'une des parties du dossier, par exemple la partie 2 sur les figures, est reliée aux crochets **41** par un moyen de liaison cinématique 6 qui, dans le mode de réalisation préférentiel représenté sur les figures, est constitué d'un câble 61 coulissant dans une gaine 62 et relié à une came 63 fixée sur un flasque latéral 22 du dossier 2 et solidaire en rotation de celui-ci. Le câble 61 est fixé sur la came 63 en un point écarté de l'axe d'articulation X' X, comme le montre la figure 3.

L'utilisation d'un lien souple tel qu'un câble permet de tenir compte au mieux des contraintes d'encombrement et de désaxage des différents organes de commande. Cependant, d'autres types de liaison pourraient être utilisés comme, par exemple, une liaison mécanique par tringles, bielles, manivelles, une liaison hydraulique, électrique ou autre.

Lorsque la partie 2 du dossier est rabattue, le câble 61 actionné par la came 63 tire vers l'arrière le crochet central 41a et, en même temps, les deux autres crochets 41, l'ensemble étant solidarisé en rotation par la tige transversale 4.

Le châssis 1 de la banquette étant ainsi désolidarisé du plancher 10, l'ensemble du siège peut être relevé en position verticale.

On voit que cette opération est transparente pour le client, le décrochage des organes d'attache s'effectuant simplement par la mise en tablette de l'une des parties du dossier qui sert de bras de levier pour la commande de relevage des crochets.

Un tel système de commande peut être appliqué à un dossier en une seule partie. Cependant, l'invention est spécialement adaptée à un dossier en deux parties et présente l'avantage, dans ce cas, d'apporter plusieurs possibilités.

Dans l'exemple représenté sur les dessins, la commande de décrochement 6 est relié à l'une des parties 2 du dossier, de préférence la plus grande partie correspondant à deux passagers.

L'autre partie 20 reste indépendante et peut, par exemple, être repliée pour augmenter l'espace de chargement de ce coté, le siège arrière étant occupé par deux passagers dont la sécurité est assurée normalement.

Si l'on replie la partie 2 qui commande le relevage des crochets, l'autre partie 20 du dossier peut rester droite, la banquette restant disponible pour un passager. Cependant, dans la mesure où les trois crochets 41 ont été relevés, la sécurité de ce passager arrière n'est assurée que par le châssis 1 de la banquette qui reste solidarisé avec le plancher par les glissières 11 dont le déverrouillage est assuré par des moyens classiques non représentés sur les dessins.

Il est, cependant, préférable, pour assurer une sécurité complète, que les organes d'attache 3 ne soient désolidarisés du plancher 10, par relevage des crochets 41, qu'après avoir rabattu les deux parties 2, 20 du dossier.

A cet effet, la partie 2 qui commande le relevage des crochets 41 peut être munie d'un organe de solidarisation tel qu'une patte 23 prenant appui sur l'autre partie 20 du dossier dans le sens de rabattement de celui-ci.

De la sorte, la partie 20 qui ne commande pas les crochets 41 peut être rabattue seule afin d'augmenter de ce coté, l'espace de chargement et les trois crochets 41 restent engagés pour assurer la sécurité des passagers de l'autre coté de la banquette. En revanche, si l'on rabat la partie 2 du dossier qui commande les crochets 41, celle-ci entraîne obligatoirement le rabattement de l'autre partie 20 du dossier et les trois crochets 41 de maintien des organes d'attache 3 sont relevés, l'ensemble du siège arrière pouvant être verticalisé.

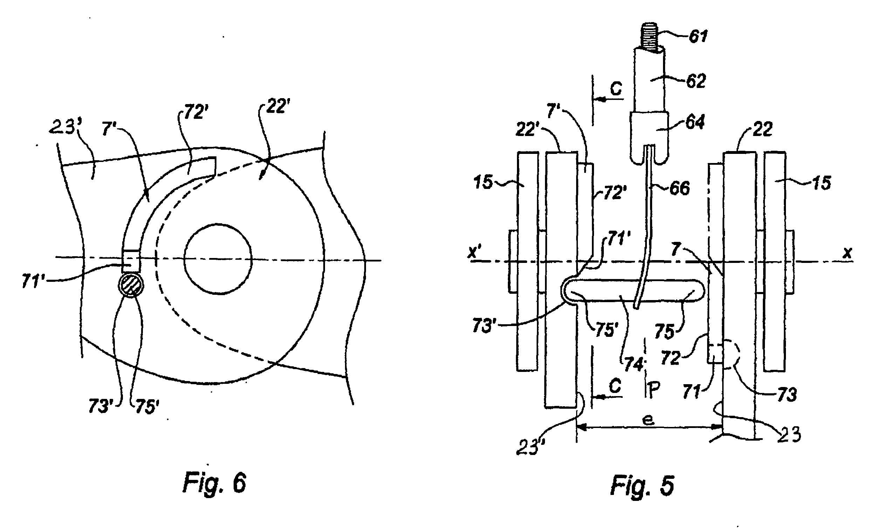

Dans un mode de réalisation plus perfectionné illustré par les figures 4 et 5, le décrochage des organes d'attache peut être commandé indifféremment par l'une ou l'autre des deux parties 2, 20 du dossier.

Sur la figure 4 on a représenté schématiquement, en perspective, les flasques 22, 22' de maintien des cotés adjacents des deux parties 2, 20 du dossier qui sont articulées, autour de l'axe X' X, sur des flasques fixes 15 montés sur la partie arrière 14 du châssis 1 de la banquette. Sur la figure 4, la partie 2 du dossier placée à gauche du véhicule en regardant vers l'avant, a été rabattue, la partie droite 20, avec son flasque 22', restant relevée. Le fiasque 22 de la partie gauche a également été représenté en traits mixtes, dans sa position relevée.

La même disposition est représentée en vue de dessus, sur la figure 5.

Chacun des deux flasques 22, 22' est muni, sur sa face externe tournée vers l'autre partie du dossier, d'une came 7, 7' constituée d'une partie en saillie circulaire centrée sur l'axe d'articulation X' X et dont l'extrémité 71, 71' tournée vers la banquette, forme une rampe inclinée qui s'écarte progressivement du plan de la face externe 23, 23' du flasque 22, 22' et est prolongée par une face circulaire 72, 72' parallèle à ce plan et, par conséquent, orthogonale à l'axe d'articulation X' X.

D'autre part, la face interne 23, 23' de chaque flasque 22, 22' est munie, à l'extrémité de la rampe 71 71', d'un logement 73, 73' constitué, par exemple d'un trou borgne.

Comme précédemment, le déverrouillage des crochets 41 est commandé par un câble 61 coulissant dans une gaine 62 ayant une tête 64 fixée sur une pièce d'appui 65 solidaire du châssis 1 de la banquette (figure 3).

Cependant, au lieu d'être relié à la partie 2 du dossier, comme dans le mode de réalisation des figures 1, 2 et 3, le câble 61 est, dans ce cas, fixé à son extrémité sur une lame flexible 66 qui est encastrée, à sa base, avec possibilité de coulissement longitudinal, dans la tête 64 de la gaine 62, et dont l'extrémité opposée est fixée au milieu d'une tige 74 s'étendant entre les deux flasques 22 22' et ayant un longueur correspondant à leur écartement e.

Dans la position redressée des deux parties 2, 20 du dossier et, par conséquent, des deux flasques 22 22', la lame flexible 66 est placée dans le plan médian vertical P, à égale distance des deux flasques 22 22' et la tige 74 est donc centrée sur ce plan. Ses extrémités 75, 75' qui sont arrondies, se trouvent alors au niveau de la base des deux rampes 71 71', c'est-à-dire en face des logements 73, 73'.

Lorsque l'une des deux parties du dossier, par exemple la partie de droite 2, est rabattue, l'extrémité correspondante 75 de la tige 74 passe sur la rampe 71 de la came 7 et la tige 74 est donc repoussée vers l'autre partie 20 du dossier de telle sorte que son extrémité opposée 75' pénètre dans le logement correspondant 73' dès le début de la rotation du flasque 22 de la partie rabattue 2.

Cette rotation peut se poursuivre jusqu'au repliement complet du dossier 2, l'extrémité 75 de la tige 74 glissant sur la face circulaire 72 de la came 7 et l'extrémité opposée 75' restant engagée dans le logement 73'. Le rabattement de la partie 2 du dossier n'a donc aucune action sur la position longitudinale de la tige 74 et, par conséquent, sur la tension du câble 61 relié à celle-ci par la lame flexible 66.

En revanche, lorsque la seconde partie 20 du dossier est rabattue, la tige 74 engagée par son extrémité 75' dans le logement 73' du flasque 22' est entraînée en rotation avec celui-ci et, par l'intermédiaire de la lame 66, exerce un effort de traction sur le câble 61 qui détermine l'ouverture des crochets 41 de la façon décrite précédemment.

La tige 74 constitue donc un doigt de commande permettant de solidariser le câble 61 de déverrouillage des organes d'attache 3, alternativement avec la partie du dossier qui est rabattue en second, le rabattement de la première partie déterminant simplement la solidarisation du doigt de commande avec l'autre partie du dossier qui reste redressée.

Il est ainsi possible de rabattre, au choix, l'une ou l'autre des deux parties du dossier pour agrandir l'espace de chargement du coté correspondant, tout en maintenant le verrouillage avec le plancher des organes d'attache 3 afin d'assurer la sécurité des occupants de la partie de la banquette dont le dossier reste redressé.

C'est en effet, seulement après rabattement de la seconde partie du dossier que les organes d'attache sont déverrouillés, mais la banquette est alors inutilisable et peut être verticalisée dans son ensemble.

Il est à noter que, dans le cas d'une banquette à trois places avec une partie du dossier pour un seul occupant et l'autre partie pour deux occupants, cette disposition permet de conserver, à l'arrière, soit une seule place, soit deux places en fonction des'besoins.

Cependant, il est possible également de rabattre simultanément les deux parties 2, 20 du dossier. Dans ce cas, en effet, le doigt de commande 74 est maintenu centré, par la lame 66, dans le plan médian P et ses deux extrémités 75, 75', qui se trouvent au niveau des bases des rampes 71, 71' des deux cames 7, 7', prennent donc appui sur celles-ci lors de la rotation des deux flasques 22, 22' par rabattement simultané des deux parties du dossier, le doigt de commande 74 étant ainsi entraîné en tirant sur le câble 61 qui commande le déverrouillage de l'ensemble des organes d'attache.

Un tel système de commande par doigt coulissant et came est particulièrement simple mais pourrait être remplacé, plus généralement, par un dispositif du type « passe » lorsqu'un dossier est rabattu seul, et « passe pas » lorsque le deuxième dossier est rabattu après le premier.

On voit donc que l'invention donne de multiples possibilités tout en simplifiant considérablement les opérations de déverrouillage pour la mise en portefeuille du dossier.

Mais l'invention ne se limite pas aux détails des modes de réalisation qui viennent d'être décrits à titre de simples exemples, d'autres dispositions analogues pouvant être imaginées en utilisant des moyens équivalents. En particulier la commande de déverrouillage par câble présente l'avantage de s'adapter facilement à toutes les conformations de la banquette mais d'autres systèmes de commande sont possibles dès lors que l'ouverture des crochets est commandée directement par la rotation du dossier ou d'une partie de celui-ci.

D'autres part, les assises et les dossiers pivotent, habituellement, autour d'axes transversaux, mais la commande de déverrouillage selon l'invention peut s'adapter à d'autres dispositions, par exemple un pivotement latéral autour d'un axe parallèle à la direction longitudinale du véhicule.

De même, l'invention peut s'appliquer à d'autres types de banquettes, par exemple avec un dossier en deux parties ½ et à tous types d'organes d'attache des ceintures de sécurité.

A cet égard, il est à noter que la commande de décrochage des organes d'attache peut s'appliquer non seulement à des ceintures de sécurité de passagers mais aussi à tout système de retenue, par exemple d'une charge.

Par ailleurs, selon les efforts à supporter, le système d'accrochage des organes d'attache pourrait ne comporter qu'un ou deux crochets, ou bien un plus grand nombre.

D'ailleurs, il est plus simple de commander simultanément le décrochage de tous les organes d'attache, les trois crochets étant solidaires en rotation, mais il serait aussi possible de prévoir, pour chacun des organes d'attache, un moyen d'accrochage individuel dont le déverrouillage serait commandé par la partie du dossier correspondante, les crochets étant alors commandés séparément.

## Revendications

1. Procédé de .relevage d'un siège de véhicule fixé sur un plancher (10) du véhicules et comportant une assise ayant un châssis (1) monté pivotant autour d'un premier axe sur le plancher (10) par l'intermédiaire d'un premier moyen d'articulation verrouillable, et un dossier (2, 20) ayant un châssis monté pivotant autour d'un second axe (x' x) sur le châssis (1) de l'assise, par intermédiaire d'un second moyen d'articulation verrouillable (21), le véhicule étant équipé d'un système de retenue comportant au moins un organe d'attache (30, 30') solidaire du châssis (1) de l'assise et relié de façon amovible au plancher (10) du véhicule par au moins un moyen d'accrochage verrouillable (4; 41), **caractérisé en ce que** le repliement d'au moins une partie du dossier (2, 20) sur l'assise par pivotement autour de son axe d'articulation x' x commande le déverrouillage d'au moins un moyen d'accrochage (41) d'au moins un organe d'attache (30), **en ce que** après déverrouillage de l'articulation (21) de l'une des parties (2) du dossier, le repliement de cette partie (2) du dossier sur l'assise commande le déverrouillage des organes d'attache (30, 30'), l'autre partie (41) du dossier (20) restant redressée pour un occupant dont la sécurité est assurée par l'un des organes d'attache (30') et le châssis (1) de l'assise sur lequel il est fixé, **en ce qu'**un premier dossier (20) peut être replié seul sans action sur les moyens d'accrochage (41) des organes d'attache (30, 30') et **en ce que** le repliement du second dossier (2) entraîne le repliement du premier, dossier et commande le déverrouillage de l'ensemble des moyens d'accrochage (41) des organes d'attache (30, 30'), et **en ce que** le déverrouillage de l'ensemble des moyens d'accrochage (41) des organes d'attache (30, 30') peut être commandé de deux façons différentes, respectivement par repliement simultané des deux parties (2, 20) du dossier, ou bien après repliement préalable de l'une quelconque (2) des deux parties du dossier, sans action sur les moyens d'accrochage (41) des organes d'attache (30, 30'), le repliement de l'autre partie (20) commandant ensuite le déverrouillage de l'ensemble.

2. Siège de véhicule apte à être fixé sur un plancher (10) d'un véhicule comportant une assise ayant un châssis (1) monté pivotant autour d'un premier axe apte à être relié au plancher (10) par l'intermédiaire d'une premier moyen d'articulation verrouillable, et un dossier (2, 20) ayant un châssis monté pivotant sur le châssis (1) de l'assise, autour d'un second axe (x' x), par l'intermédiaire d'un second moyen d'articulation verrouillable (21), le siège étant équipé d'un système de retenue comportant au moins un organe d'attache (30, 30') solidaire du châssis (1) de l'assise et apte à être relié de façon amovible au plancher (10) du véhicule par au moins un moyen d'accrochage verrouillage (4, 41), au moins un organe d'attache (30, 30') du système de sécurité est fixé sur une pièce de support (4) solidaire du châssis (1) de l'assise et apte à être reliée de façon amovible au plancher (10) par au moins un moyen d'accrochage verrouillable (41), mobile entre une position de verrouillage pour laquelle le moyen d'accrochage (41) s'engage sur une partie d'appui conjuguée du plancher (10) et. une position de déverrouillage, **caractérisé en ce que** ledit moyen d'accrochage (41) est relié cinématiquement à au moins une partie (2) du dossier de façon que le repliement de ladite partie (2) du dossier détermine le déverrouillage du moyen d'accrochage (41) et que le redressement de ladite partie (2) du dossier détermine le verrouillage du moyen d'accrochage (41) sur la partie d'appui conjuguée du plancher (10) **en ce que** le moyen d'accrochage (41) est relié cinématiquement à une première partie (2) du dossier et que celle-ci est munie d'un moyen (23) de solidarisation avec la seconde partie (20) du dossier dans le sens de repliement, de telle sorte que le repliement de la seconde partie (20) s'effectue sans action sur le moyen d'accrochage (41) et que le repliement de la première partie (2) détermine le repliement simultané de la seconde partie (20) et commande le décrochage des deux organes d'attache (30, 30') et **en ce que** le moyen d'accrochage (41) est relié cinématiquement à l'une ou l'autre des deux parties (2, 20) du dossier par un organe de solidarisation (74) placé entre deux cotés adjacents (22, 22') des deux parties (2, 20) du dossier et susceptible de se verrouiller alternativement sur l'une quelconque (20) des deux parties du dossier par repliement de l'autre partie (2).

3. Siège selon la revendication 2, **caractérisé en ce que** le moyen d'accrochage (41) est monté rotatif autour d'un axe (Y, Y')sur une tige de supports (4) solidaire du châssis (1) de la banquette et comporte une partie (42) formant crochet, s'engageant sur une partie d'appui conjuguée du plancher (10) du véhicule, par rotation autour de l'axe (Y, Y') de la tige de support (4).

4. Siège selon la revendication 3, **caractérisé en ce qu'**il comporte un moyen (6) de liaison cinématique entre le moyen d'accrochage (41) et au moins une partie (2) du dossier, transformant la rotation du dossier autour de son axe d'articulation en une rotation du moyen d'accrochage (41) au moins dans le sens de dégagement de la partie (42) formant crochet.

5. Siège selon la revendication 4, **caractérisé en ce que** le moyen (6) de liaison cinématique comprend un lien (61) de longueur constante fixé à une extrémité sur le moyen d'accrochage (41) en un point écarté de l'axe de rotation (Y,' Y) et à une autre extrémité sur une partie du dossier, en un point écarté de l'axe d'articulation (X', X):

6. Siège selon la revendication 5, **caractérisé en ce que** le moyen (6) de liaison cinématique comporte un lien souple (61) déterminant la rotation du moyen d'accrochage (41) dans le sens d'ouverture du crochet (42), contre l'action d'un moyen (43) de rappel élastique du crochet (42) dans sa position de verrouillage.

7. Siège selon l'une des revendications 2 à 6, **caractérisé en ce que** le système de retenue comprend au moins deux organes d'attache (30, 30') d'occupants et **en ce que** le dossier comprend deux parties (2, 20) correspondant chacune à au moins un occupant du véhicule.

8. Siège selon la revendication 7, **caractérisé en ce que** le moyen d'accrochage (41) est relié cinématiquement à l'une des parties (2) du dossier dont le repliement commande le décrochage des organes d'attache (30, 30'), la partie (20) du dossier redressée servant à un occupant dont la sécurité est assurée par le châssis (1) de la banquette restant verrouillé sur le plancher (10).

9. Siège selon la revendication 8, **caractérisé en ce que** l'organe de solidarisation est un doigt de commande constitué d'une tige (74) s'étendant transversalement entre deux cotés adjacents (22, 22') des deux parties (2, 20) du dossier et susceptible de s'engager, par déplacement axial, dans l'un ou l'autre de deux orifices (73, 73') ménagés respectivement sur lesdits cotés adjacents (22, 22').

10. Siège selon la revendication 9, **caractérisé en ce que** chacun des cotés adjacents (22, 22') des deux parties (2, 20) du dossier porte une came (7) constituée d'une partie en saillie circulaire, centrée sur l'axe d'articulation (X', X) du dossier et comportant une rampe (71) susceptible, par rotation de la partie (2) du dossier portant la came (7) considérée, de repousser axialement le doigt (74) de façon que son extrémité opposée (75') s'engage dans un orifice (73') ménagé sur le coté (22') de l'autre partie (20) du dossier, contre l'action d'un moyen (66) de rappel du doigt (74) dans une position médiane pour laquelle les deux extrémités (75, 75') du doigt (74) sont écartées respectivement des cotés (22, 22') des deux parties (2, 20) du dossier, sans engagement dans les orifices (73, 73') correspondants.

11. Siège selon la revendication 10, **caractérisé en ce que**, dans la position médiane du doigt (74), les extrémités (75, 75') de celui-ci prennent appui sur une face antérieure (71, 71') formant rampe de chacune des deux cames (7, 7'), de façon que, par repliement de l'une (22) des parties du dossier, la came (7) placée sur cette partie repousse le doigt (74) vers l'autre partie (22) pour son, engagement dans l'orifice (73') correspondant et que, par repliement simultané des deux parties (2, 20) du dossier, les deux cames (7, 7') prennent appui respectivement sur les deux extrémités (75, 75') du doigt et, entraînent ce dernier dans leur rotation pour la commande du déverrouillage des organes d'attache (30, 30').

12. Siège selon l'une des revendications 2 à 11, **caractérisé en ce que** le système de retenue du siège relevable est prévu pour trois occupants et comprend deux organes d'attache (30, 30') pour deux occupants latéraux et deux organes d'attache (31, 31') pour un occupant central et que le dossier comprend deux parties dissymétriques, respectivement une partie (20) de largeur 1/3 pour un occupant latéral et une partie (2) de largeur 2/3 pour un occupant central et l'autre occupant latéral.

13. Siège selon l'une des revendications 2 à 12, **caractérisé en ce que**, le siège étant prévu au moins deux occupants et le dossier comportant au moins deux parties (2, 20), le châssis (1) de l'assise est muni d'au moins deux organes d'attache (30, 30') reliés séparément au plancher (10), chacun par un moyen d'accrochage (41) et que le déverrouillage de chaque moyen d'accrochage (41) est commandé individuellement par le repliement de la partie (2, 20) de dossier correspondante.

## Claims

1. Method for raising a vehicle seat fixed to a floor (10) of the vehicle and comprising a squab having a frame (1) mounted so as to pivot about a first axis on the floor (10) by means of a first lockable articulation means, and a back (2, 20) having a frame mounted so as to pivot about a second axis (x'x) on the frame (1) of the squab, by means of a second lockable articulation means (21), the vehicle being fitted with a retention system comprising at least one attachment member (30, 30') secured to the frame (1) of the squab and connected in a removable manner to the floor (10) of the vehicle by at least one lockable coupling means (4, 41), **characterized in that** the folding of at least one portion of the back (2, 20) onto the squab by pivoting about its axis (x'x) of articulation controls the unlocking of at least one coupling means (41) of at least one attachment member (30), **in that**, after unlocking of the articulation (21) of one of the portions (2) of the back, the folding of this portion (2) of the back on the squab controls the unlocking of the attachment members (30, 30'), the other portion (41) of the back (20) remaining upright for an occupant whose security is provided by one of the attachment members (30') and the frame (1) of the squab to which it is attached, **in that** a first back (20) may alone be folded without action on the coupling means (41) of the attachment members (30, 30') and **in that** the folding of the second back (2) causes the folding of the first back and controls the unlocking of all of the coupling means (41) of the attachment members (30, 30'), and **in that** the unlocking of all of the coupling means (41) of the attachment means (30, 30') may be controlled in two different ways, respectively by simultaneously folding the two portions (2, 20) of the back, or else after first folding any one (2) of the two portions of the back, with no action on the coupling means (41) of the attachment members (30, 30'), the folding of the other portion (20) then controlling the unlocking of the assembly.

2. Vehicle seat capable of being attached to a floor (10) of a vehicle comprising a squab having a frame (1) mounted so as to pivot about a first axis capable of being connected to the floor (10) by means of a first lockable articulation means, and a back (2, 20) having a frame mounted so as to pivot on the frame (1) of the squab, about a second axis (x'x), by means of a second lockable articulation means (21), the seat being fitted with a retention system comprising at least one attachment member (30, 30') secured to the frame (1) of the squab and capable of being connected in a removable manner to the floor (10) of the vehicle by at least one lockable coupling means (4, 41), at least one attachment member (30, 30') of the security system is fixed to a supporting part (4) secured to the frame (1) of the squab and capable of being connected in a removable manner to the floor (10) by at least one lockable coupling means (41), that can be moved between a locked position for which the coupling means (41) is engaged in a paired bearing portion of the floor (10) and an unlocked position, **characterized in that** the said coupling means (41) is kinematically connected to at least one portion (2) of the back so that the folding of the said portion (2) of the back determines the unlocking of the coupling means (41) and the raising of the said portion (2) of the back determines the locking of the coupling means (41) on the paired bearing portion of the floor (10), **in that** the coupling means (41) is kinematically connected to a first portion (2) of the back and that the latter is furnished with a means (23) for securing to the second portion (20) of the back in the direction of folding, so that the folding of the second portion (20) is carried out with no action on the coupling means (41) and the folding of the first portion (2) determines the simultaneous folding of the second portion (20) and controls the uncoupling of the two attachment members (30, 30') and **in that** the coupling means (41) is kinematically connected to one or the other of the two portions (2, 20) of the back by a securing member (74) placed between two adjacent sides (22, 22') of the two portions (2, 20) of the back and capable of being locked alternatively on any one (20) of the two portions of the back by folding of the other portion (2) .

3. Seat according to Claim 2, **characterized in that** the coupling means (41) is mounted so as to rotate about an axis (y, y') on a supporting rod (4) secured to the frame (1) of the banquette and comprises a portion (42) forming a hook being engaged on a paired bearing portion of the floor (10) of the vehicle, by rotation about the axis (y, y') of the supporting rod (4).

4. Seat according to Claim 3, **characterized in that** it comprises a means (6) of kinematic connection between the coupling means (41) and at least one portion (2) of the back, converting the rotation of the back about its axis of articulation into a rotation of the coupling means (41) at least in the direction of disengaging of the portion (42) forming a hook.

5. Seat according to Claim 4, **characterized in that** the means (6) of kinematic connection comprises a link (61) of constant length fixed at one end to the coupling means (41) at a point at a distance from the axis of rotation (y',y) and at another end to a portion of the back, at a point at a distance from the axis of articulation (x',x).

6. Seat according to Claim 5, **characterized in that** the means (6) of kinematic connection comprises a flexible link (61) determining the rotation of the coupling means (41) in the direction of opening of the hook (42), against the action of a means (43) for elastically returning the hook (42) to its locked position.

7. Seat according to one of Claims 2 to 6, **characterized in that** the retention system comprises at least two occupant attachment members (30,30') and **in that** the back comprises two portions (2,20) each corresponding to at least one occupant of the vehicle.

8. Seat according to Claim 7, **characterized in that** the coupling means (41) is kinematically connected to one of the portions (2) of the back, the folding of which controls the uncoupling of the attachment members (30,30'), the portion (20) of the raised back being used for one occupant whose security is provided by the frame (1) of the banquette remaining locked on the floor (10).

9. Seat according to Claim 8, **characterized in that** the securing member is a control finger consisting of a rod (74) extending transversely between two adjacent sides (22,22') of the two portions (2,20) of the back and capable of being engaged, by axial movement, in one or the other of two orifices (73,73') made respectively on the said adjacent sides (22,22').

10. Seat according to Claim 9, **characterized in that** each of the adjacent sides (22,22') of the two portions (2,20) of the back supports a cam (7) consisting of a circular protruding portion, centred on the axis of articulation (x'x) of the back and comprising a ramp (71) capable, by rotation of the portion (2) of the back supporting the cam (7) in question, of axially pushing away the finger (74) so that its opposite end (75') is engaged in an orifice (73') made on the side (22') of the other portion (20) of the back, against the action of a means (66) for returning the finger (74) to a middle position for which the two ends (75,75') of the finger (74) are moved away respectively from the sides (22,22') of the two portions (2,20) of the back, with no engagement in the corresponding orifices (73,73').

11. Seat according to Claim 10, **characterized in that**, in the middle position of the finger (74), the ends (75,75') of the latter press on an anterior face (71,71') forming a ramp of each of the two cams (7,7') so that, by folding of one (22) of the portions of the back, the cam (7) placed on this portion pushes away the finger (74) towards the other portion (22) for its engagement in the corresponding orifice (73') and so that, by simultaneous folding of the two portions (2,20) of the back, the two cams (7,7') press respectively on the two ends (75,75') of the finger and move the latter in their rotation for controlling the unlocking of the attachment members (30,30').

12. Seat according to one of Claims 2 to 11, **characterized in that** the system for retaining the raisable seat is provided for three occupants and comprises two attachment members (30,30') for two side occupants and two attachment members (31,31') for a central occupant and **in that** the back comprises two dissymmetrical portions, respectively one portion (20) 1/3 wide for a side occupant and one portion (2) 2/3 wide for a central occupant and the other side occupant.

13. Seat according to one of Claims 2 to 12, **characterized in that**, the seat being provided for at least two occupants and the back comprising at least two portions (2,20), the frame (1) of the squab is furnished with at least two attachment members (30,30') connected separately to the floor (10), each by a coupling means (41), and **in that** the unlocking of each coupling means (41) is controlled individually by the folding of the corresponding portion (2,20) of the back.

## Patentansprüche

1. Verfahren zum Anheben eines Sitzes eines Fahrzeugs, der auf einem Boden (10) des Fahrzeugs befestigt ist und eine Sitzfläche aufweist, die ein Chassis (1) hat, das um eine erste Achse auf dem Boden (10) über ein erstes verriegelbares Anlenkmittel schwenkend montiert ist, und eine Rückenlehne (2, 20), die ein Chassis hat, das um eine zweite Achse (x'x) auf dem Chassis (1) der Sitzfläche über ein zweites verriegelbares Anlenkmittel (21) schwenkend montiert ist, wobei das Fahrzeug mit einem Rückhaltesystem ausgestattet ist, das mindestens ein Befestigungsorgan (30, 30') aufweist, das fest mit dem Chassis (1) der Sitzfläche verbunden ist und abnehmbar mit dem Boden (10) des Fahrzeugs durch mindestens ein verriegelbares Anhängmittel (4, 41) verbunden ist, **dadurch gekennzeichnet, dass** das Zurückklappen mindestens eines Teils der Rückenlehne (2, 20) auf die Sitzfläche durch Schwenken um ihre Anlenkachse x'x das Entriegeln mindestens eines Anhängmittels (41) mindestens eines Befestigungsorgans (30) steuert, dass nach dem Entriegeln der Anlenkung (21) eines der Teile (2) der Rückenlehne das Zurückklappen dieses Teils (2) der Rückenlehne auf die Sitzfläche das Entriegeln der Befestigungsorgane (30, 30') steuert, wobei der andere Teil (41) der Rückenlehne (20) für einen Insassen aufgestellt bleibt, dessen Sicherheit von einem der Befestigungsorgane (30') und dem Chassis (1) der Sitzfläche, auf dem es befestigt ist, gewährleistet ist, dass eine erste Rückenlehne (20) allein ohne Einwirken auf die Anhängmittel (41) der Befestigungsorgane (30, 30') zurückgeklappt werden kann und dass das Zurückklappen der zweiten Rückenlehne (2) das Zurückklappen der ersten Rückenlehne nach sich zieht und das Entriegeln der Einheit der Anhängmittel (41) der Befestigungsorgane (30, 30') steuert, und dass das Entriegeln der Einheit der Anhängmittel (41) der Befestigungsorgane (30, 30') auf zwei verschiedene Arten gesteuert werden kann, jeweils durch gleichzeitiges Zurückklappen der zwei Teile (2, 20) der Rückenlehne oder nach dem vorherigen Zurückklappen eines beliebigen (2) der zwei Teile der Rückenlehne, ohne Einwirken auf die Anhängmittel (41) der Befestigungsorgane (30, 30'), wobei das Zurückklappen des anderen Teils (20) danach das Entriegeln der Einheit steuert.

2. Fahrzeugsitz, der auf einem Boden (10) eines Fahrzeugs befestigt werden kann, der eine Sitzfläche aufweist, die ein Chassis (1) hat, das um eine erste Achse, die mit dem Boden (10) über ein erstes verriegelbares Anlenkmittel verbunden werden kann, schwenkend montiert ist, und eine Rückenlehne (2, 20), die ein Chassis hat, das auf das Chassis (1) der Sitzfläche um eine zweite Achse (x, x') über ein zweites verriegelbares Anlenkmittel (21) schwenkend montiert ist, wobei der Sitz mit einem Rückhaltesystem ausgestattet ist, das mindestens ein Befestigungsorgan (30, 30') aufweist, das mit dem Chassis (1) der Sitzfläche fest verbunden ist und abnehmbar mit dem Boden (10) des Fahrzeugs über mindestens ein verriegelbares Anhängmittel (4, 41) verbunden werden kann, wobei mindestens ein Befestigungsorgan (30, 30') des Sicherheitssystems auf einem Tragteil (4) befestigt ist, der fest mit dem Chassis (1) der Sitzfläche verbunden ist und abnehmbar mit dem Boden (10) durch mindestens ein verriegelbares Anhängmittel (41) verbunden werden kann, das zwischen einer Verriegelungsposition, bei der das Anhängmittel (41) auf einem zu dem Boden (10) gehörenden Auflageteil eingreift, und einer Entriegelungsposition beweglich ist, **dadurch gekennzeichnet, dass** das Anhängmittel (41) kinematisch mit mindestens einem Teil (2) der Rückenlehne derart verbunden ist, dass das Zurückklappen des Teils (2) der Rückenlehne das Entriegeln des Anhängmittels (41) bestimmt, und dass das Aufrichten des Teils (2) der Rückenlehne das Verriegeln des Anhängmittels (41) auf dem Auflageteil, der zu dem Boden (10) gehört, bestimmt, dass das Anhängmittel (41) kinematisch mit einem ersten Teil (2) der Rückenlehne verbunden ist, und dass dieser mit einem Mittel (23) zum festen Verbinden mit dem zweiten Teil (20) der Rückenlehne in die Rückklapprichtung versehen ist, so dass das Zurückklappen des zweiten Teils (20) ohne Einwirken auf das Anhängmittel (41) erfolgt, und dass das Zurückklappen des ersten Teils (2) das gleichzeitige Zurückklappen des zweiten Teils (20) bestimmt und das Aushängen der zwei Befestigungsorgane (30, 30') steuert, und dass das Anhängmittel (41) kinematisch mit dem einen oder anderen der zwei Teile (2, 20) der Rückenlehne durch ein Befestigungsorgan (74) verbunden ist, das zwischen zwei nebeneinanderliegenden Seiten (22, 22') der zwei Teile (2, 20) der Rückenlehne platziert ist und sich abwechselnd auf einem beliebigen (20) der zwei Teile der Rückenlehne durch Zurückklappen des anderen Teils (2) verriegeln kann.

3. Sitz nach Anspruch 2, **dadurch gekennzeichnet, dass** das Anhängmittel (41) drehend um eine Achse (y, y') auf einem Tragschaft (4) montiert ist, der fest mit dem Chassis (1) der Bank verbunden ist und einen Teil (42) aufweist, der einen Haken bildet, der auf einem Auflageteil, der zu dem Boden (10) des Fahrzeugs gehört, durch Drehen um die Achse (y, y') des Tragschafts (4) eingreift.

4. Sitz nach Anspruch 3, **dadurch gekennzeichnet, dass** er ein kinematisches Verbindungsmittel (6) zwischen dem Anhängmittel (41) und mindestens einem Teil (2) der Rückenlehne aufweist, das die Drehung der Rückenlehne um ihre Anlenkachse in eine Drehung des Anhängmittels (41) mindestens in die Richtung des Freigebens des Teils (42), der den Haken bildet, umwandelt.

5. Sitz nach Anspruch 4, **dadurch gekennzeichnet, dass** das kinematische Verbindungsmittel (6) eine Verbindung (61) mit konstanter Länge aufweist, die an einem Ende auf dem Anhängmittel (41) in einem Punkt, der von der Rotationsachse (y', y) beabstandet ist, und an einem anderen Ende auf einem Teil der Rückenlehne, in einem Punkt, der von der Anlenkachse (x', x) beabstandet ist, befestigt ist.

6. Sitz nach Anspruch 5, **dadurch gekennzeichnet, dass** das kinematische Verbindungsmittel (6) eine biegsame Verbindung (61) aufweist, die das Drehen des Anhängmittels (41) in die Richtung des Öffnens des Hakens (42) gegen die Wirkung eines elastischen Rückholmittels (43) des Hakens (42) in seine Verriegelungsposition bestimmt.

7. Sitz nach einem der Ansprüche 2 bis 6, **dadurch gekennzeichnet, dass** das Rückhaltesystem mindestens zwei Befestigungsorgane (30, 30') von Insassen aufweist, und dass die Rückenlehne zwei Teile (2, 20) aufweist, die jeweils einem Insassen des Fahrzeugs entsprechen.

8. Sitz nach Anspruch 7, **dadurch gekennzeichnet, dass** das Anhängmittel (41) kinematisch mit einem der Teile (2) der Rückenlehne verbunden ist, deren Zurückklappen das Aushängen der Befestigungsorgane (30, 30') steuert, wobei der Teil (20) der aufgerichteten Rückenlehne einem Insassen dient, dessen Sicherheit von dem Chassis (1) der Bank, die auf dem Boden (10) verriegelt bleibt, sichergestellt ist.

9. Sitz nach Anspruch 8, **dadurch gekennzeichnet, dass** das Organ zum festen Verbinden ein Steuerfinger ist, der aus einem Schaft (74) besteht, der sich quer zwischen zwei nebeneinanderliegenden Seiten (22, 22') der zwei Teile (2, 20) der Rückenlehne erstreckt und sich durch axiales Bewegen in die eine oder andere von zwei Öffnungen (73, 73') einfügen kann, die jeweils auf den nebeneinanderliegenden Seiten (22, 22') eingerichtet sind.

10. Sitz nach Anspruch 9, **dadurch gekennzeichnet, dass** jede der nebeneinanderliegenden Seiten (22, 22') der zwei Teile (2, 20) der Rückenlehne eine Nocke (7) trägt, die einerseits als kreisförmiger Vorsprung, zentriert auf die Anlenkachse (x', x) der Rückenlehne ausgebildet ist und eine Rampe (71) aufweist, die durch Drehen des Teils (2) der Rückenlehne, die die Nocke (7) trägt, den Finger (74) derart axial zurückschieben kann, dass sich sein entgegengesetztes Ende (75') in eine Öffnung (73'), die auf der Seite (22') des anderen Teils (20) der Rückenlehne eingerichtet ist, gegen die Wirkung eines Rückholmittels (66) des Fingers (74) in eine mittlere Position, für die die zwei Enden (75, 75') des Fingers (74) jeweils von den Seiten (22, 22') der zwei Teile (2, 20) der Rückenlehne beabstandet sind, ohne Eingreifen in die entsprechenden Öffnungen (73, 73') einfügt.

11. Sitz nach Anspruch 10, **dadurch gekennzeichnet, dass** die Enden (75, 75') des Fingers (74) in der mittleren Position dieses auf einer vorderen Fläche (71, 71') aufliegen, die eine Rampe jeder der zwei Nocken (7, 7') derart bildet, dass durch Zurückklappen des einen (22) der Teile der Rückenlehne die Nocke (7), die auf diesem Teil platziert ist, den Finger (74) zu dem anderen Teil (22) für sein Eingreifen in die entsprechende Öffnung (73') zurückschiebt, und dass durch gleichzeitiges 2urückklappen der zwei Teile (2, 20) der Rückenlehne die zwei Nocken (7, 7') jeweils auf den zwei Enden (75, 75') des Fingers zum Aufliegen kommen und diesen Letzteren in ihrer Drehung zum Steuern des Entriegelns der Befestigungsorgane (30, 30') mitnehmen.

12. Sitz nach einem der Ansprüche 2 bis 11, **dadurch gekennzeichnet, dass** das Rückhaltesystem des anhebbaren Sitzes für drei Insassen vorgesehen ist und zwei Befestigungsorgane (30, 30') für zwei seitliche Insassen aufweist, und zwei Befestigungsorgane (31, 31') für einen zentralen Insassen, und dass die Rückenlehne zwei unsymmetrische Teile aufweist, jeweils einen Teil (20) mit 1/3 Breite für einen seitlichen Insassen und einen Teil (2) mit 2/3 Breite für einen zentralen Insassen und den anderen seitlichen Insassen.

13. Sitz nach einem der Ansprüche 2 bis 12, **dadurch gekennzeichnet, dass**, weil der Sitz für mindestens zwei Insassen bestimmt ist und die Rückenlehne mindestens zwei Teile (2, 20) aufweist, das Chassis (1) der Sitzfläche mit mindestens zwei Befestigungsorganen (30, 30') versehen ist, die getrennt mit dem Boden (10) jeweils durch ein Anhängmittel (41) verbunden sind, und dass das Entriegeln jedes Anhängmittels (41) einzeln durch das Zurückklappen des Teils (2, 20) der entsprechenden Rückenlehne gesteuert ist.
